# EUROPEAN PATENT SPECIFICATION

(11) **EP 2 998 861 B1**
(45) Date of publication and mention of the grant of the patent: **01.05.2024**
(21) Application number: 14856929.6
(22) Date of filing: 10.03.2014
(51) Int. Cl.: G06F 8/61, G06F 9/4401, G06F 9/50, G06F 9/445

(54) **IMPLEMENTING AND DELETING METHOD AND DEVICE FOR INTELLIGENT TERMINAL MULTI-OPERATION SYSTEM**
IMPLEMENTIERUNGS- UND LÖSCHVERFAHREN UND -VORRICHTUNG FÜR EIN MULTIBETRIEBSSYSTEM FÜR INTELLIGENTE ENDGERÄTE
DISPOSITIF ET PROCÉDÉ DE MISE EN PLACE ET SUPPRESSION POUR SYSTÈME À EXPLOITATIONS MULTIPLES DE TERMINAL INTELLIGENT

(30) Priority: 30.10.2013 CN 201310528929
(43) Date of publication of application: 23.03.2016
(73) Proprietor: Huawei Device Co., Ltd., Dongguan, Guangdong 523808 (CN)
(72) Inventor: ZHOU, Zhigang, Shenzhen Guangdong 518129 (CN); KE, Yuandan, Shenzhen Guangdong 518129 (CN)
(74) Representative: Goddar, Heinz J.
(86) International application number: PCT/CN2014/073098
(87) International publication number: WO 2015/062193

(56) References cited:
- CN-A- 101 809 536
- CN-A- 102 111 482
- CN-A- 102 799 484
- CN-A- 103 559 054
- US-B1- 6 351 850

## Description

### TECHNICAL FIELD

The present invention relates to the field of mobile terminals, and in particular, to implementation and deletion methods and apparatuses for multiple operating systems on a smart device.

### BACKGROUND

Currently, usually only one operating system, for example, an Android operating system or a Windows Phone operating system, is installed on a smart device, for example, a smartphone or an iPad. However, as smart device applications develop, two or more operating systems need to be installed on a terminal for the following reasons:
1. A security requirement: One system is a commonly used system on which applications downloaded from different markets are installed, and another system is a secure system on which only a trusted application is installed.
2. A modding requirement: One system is a factory default system, and another system is firmware manufactured by a third party and may be referred to as a custom ROM.
3. A customization requirement of a user: As two systems, where one is Android and another is WP, have respective advantages and disadvantages, they meet personal requirements of the user.

In the prior art, there is still no technology available to install two or more operating systems on a smart device. However, in a personal computer (Personal Computer, PC), partitioning needs to be performed in advance to implement installation of multiple operating systems, a workload of implementing multiple operating systems is heavy, and operations are complex.

US 6,351,850 B1 discloses an apparatus and a method of installing a computer operating system on a data storage medium of a computer system. The method includes reading the data storage medium for a set of storage medium characteristics including the partition boundaries of each existing partition on the data storage medium. An identification of the operating system to be installed on the data storage medium is then received, typically in the form of a user input signal. The installation characteristic set of the identified operating system is then retrieved from an operating system rule database of the computer system, which rule database can contain a set of installation characteristics for each of a plurality of identified operating systems including a space required by each operating system on the storage medium. The read data storage medium characteristic set is compared with the retrieved operating system installation characteristic set. When the two sets differ by one or more characteristics, at least one of the data storage medium characteristics is modified so that the operating system can be installed on the data storage medium.

### SUMMARY

Embodiments of the present invention provide implementation and deletion methods and apparatuses for multiple operating systems on a smart device, which can implement that a smart device adds and deletes a partition according to capacity of an embedded multimedia card (Embedded Multimedia Card, EMMC), and further implement automatic installation and deletion of multiple operating systems, so that participation of a user is not required, thereby reducing a workload.

The present invention is defined according to the independent claims. Specific embodiments are defined in the dependent claims.

According to the implementation methods and apparatuses for multiple operating systems on a smart device provided in the embodiments of the present invention, when receiving an operating instruction for installing a new operating system, a smart device automatically adjusts, according to capacity of an EMMC storage device, a partition of an installed operating system and a partition of a new operating system to be installed, and installs, in the partition of the new operating system, an image file, stored in the storage device, of the new operating system, so that installation of multiple operating systems is implemented, and a user does not need to predefine a partition, so that it is ensured that the user can completely use all space of the smart device. When receiving an operating instruction for deleting an operating system, a smart device may also delete all content of the operating system, and automatically expand capacity of use space of an existing operating system on the smart device according to capacity of an EMMC device or a size of system space released by the operating system to be deleted, so that deletion of an operating system is implemented, and user space released by a deleted operating system can be automatically added for capacity expansion of an existing operating system, so that it is ensured that a user can completely use all space of the smart device. Therefore, in the embodiments of the present invention, addition of a partition by a smart device according to capacity of an EMMC is implemented, and further, installation of multiple operating systems is implemented, so that participation of a user is not required, thereby reducing a workload.

### BRIEF DESCRIPTION OF DRAWINGS

FIG. 1 is a flowchart of an implementation method for multiple operating systems on a smart device according to an embodiment of the present invention;
FIG. 2 is a flowchart of another implementation method for multiple operating systems on a smart device according to an embodiment of the present invention;
FIG. 3 is a flowchart of a deletion method for multiple operating systems on a smart device according to an example;
FIG. 4 is a flowchart of another deletion method for multiple operating systems on a smart device according to an example;
FIG. 5 is a schematic diagram of an implementation apparatus for multiple operating systems on a smart device according to an embodiment of the present invention;
FIG. 6 is a schematic diagram of a deletion apparatus for multiple operating systems on a smart device according to an example;
FIG. 7 is a schematic diagram of a smart device according to an embodiment of the present invention; and
FIG. 8 is a schematic diagram of a smart device according to an embodiment of the present invention.

### DESCRIPTION OF EMBODIMENTS

Technical solutions of the present invention are further described in detail with reference to the accompanying drawings and embodiments.

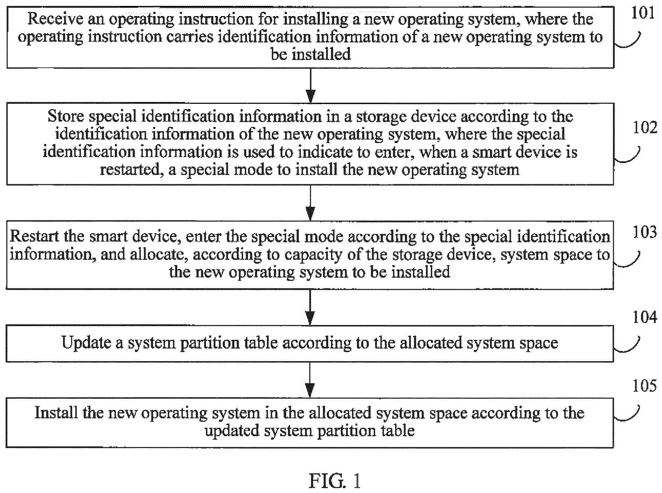

FIG. 1 is a flowchart of an implementation method for multiple operating systems on a smart device according to an embodiment of the present invention. This embodiment is performed by a smart device. As shown in the figure, this embodiment includes the following steps:
Step 101. Receive an operating instruction for installing a new operating system, where the operating instruction carries identification information of a new operating system to be installed.

Generally, one operating system is installed on a smart device by default at delivery, where the operating system may provide a human-computer interaction interface, and a user may send an operating instruction to the smart device by using the human-computer interaction interface, so that the smart device performs a corresponding operation according to the received operating instruction.

Preferably, to implement multiple operating systems on the smart device, an image file of the new operating system to be installed needs to be stored in a specified directory in a storage device, for example, an EMMC, of the smart device.

Step 102. Store special identification information in a storage device according to the identification information of the new operating system, where the special identification information is used to instruct to enter, when a smart device is restarted, a special mode to install the new operating system.

After receiving the operating instruction for installing a new operating system, the smart device may first save the special identification information at a special location of an EMMC or in a random access memory (Random Access Memory, RAM), where the special identification information is used to instruct to install, after the smart device is restarted, the new operating system, and therefore, the special mode needs to be entered.

According to the invention, the special mode refers to a system running on a smart device when an operating system is being installed or deleted, for example, a recovery mode of an Android system.

Step 103. Restart the smart device, enter the special mode according to the special identification information, and allocate, according to capacity of the storage device, system space to the new operating system to be installed.

After storing the special identification information, the smart device executes a restart process, and in a BOOT phase of the restart, if detecting the special identification information, the smart device enters a system in the special mode.

A size of system space is automatically allocated, according to capacity of the EMMC, to the new operating system to be installed, where the system space allocated to the new operating system is obtained by compressing space of an installed operating system on the smart device.

Optionally, before system space of the installed operating system is compressed, completeness of a file system of the installed operating system needs to be determined.

Step 104. Update a system partition table according to the allocated system space.

After system space is allocated to the new system, the system partition table of the smart device needs to be updated according to the allocated system space, and a partition is added, for the new operating system, to the system partition table.

Optionally, after the system partition table is updated, to ensure that the new operating system can be successfully installed, content in system space corresponding to the new partition may be erased first.

Step 105. Install the new operating system in the allocated system space according to the updated system partition table.

The image file of the new operating system is acquired from a specified directory, in which the image file of the new operating system is stored, of the EMMC, and then the new operating system can be installed in the system space corresponding to the system partition.

Preferably, if a size of file system of the installed new operating system is less than remaining system space that is obtained after the installed operating system on the smart device is compressed previously, capacity of user space of the new operating system may be expanded, so as to ensure that a user can use all space of the EMMC of the smart device.

In this embodiment of the present invention, when receiving an operating instruction for installing a new operating system, a smart device automatically adjusts, according to capacity of an EMMC storage device, a partition of an installed operating system and a partition of a new operating system to be installed, and installs, in the partition of the new operating system, an image file, stored in the storage device, of the new operating system. Therefore, in this embodiment of the present invention, automatic installation of multiple operating systems is implemented, and a user does not need to predefine a partition, so that a workload is reduced, and it can be further ensured that the user can completely use all space of a smart device.

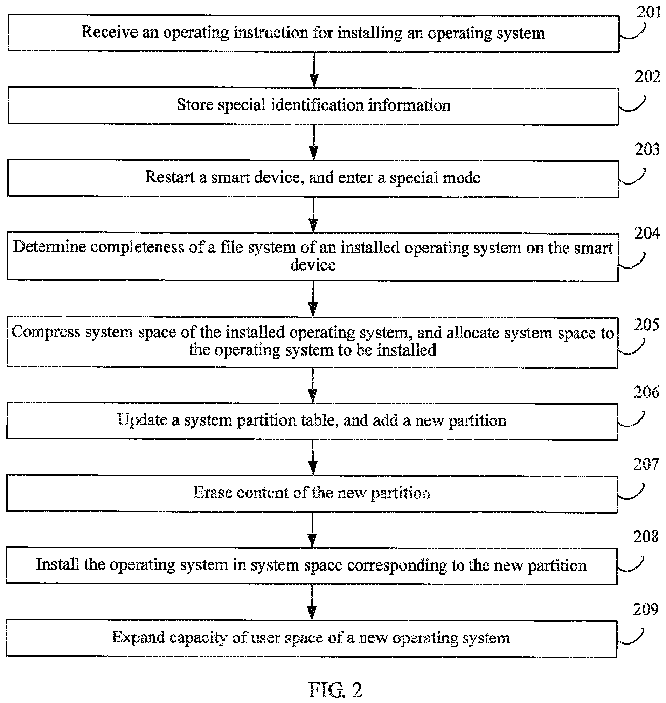

Correspondingly, an embodiment of the present invention further provides a specific implementation manner of an implementation of multiple operating systems on a smart device. FIG. 2 is a flowchart of another implementation method for multiple operating systems on a smart device according to an embodiment of the present invention. This embodiment is performed by a smart device. As shown in the figure, this embodiment includes the following steps:
Step 201. Receive an operating instruction for installing an operating system.

When an operating system installed by default at delivery runs on a smart device, the smart device may receive an operating instruction for installing an operating system that is sent by a user, where the operating instruction carries identification information of the operating system to be installed.

Preferably, to implement installation of a new operating system, an image file of the new operating system to be installed needs to be stored at a preset location, for example, in a specified directory of an EMMC of the smart device. For example, the image file of the new operating system may be stored in a root directory of the EMMC.

Step 202. Store special identification information.

After receiving the operating instruction for installing a new operating system, the smart device may first save the special identification information at a special location of an EMMC or in a RAM, where the special identification information is used to instruct to install, after the smart device is restarted, the new operating system, and therefore, the special mode needs to be entered.

Step 203. Restart a smart device, and enter a special mode.

The smart device executes a restart process, and in a BOOT phase of the restart, if detecting the special identification information, the smart device enters a system in the special mode.

Step 204. Determine completeness of a file system of an installed operating system on the smart device.

In the special mode, to install a new operating system, a new partition needs to be created first for the operating system, that is, system space is allocated to the operating system.

The smart device can ensure that a user can use all space of the EMMC at any time; therefore, to allocate system space to the new operating system, space of the installed operating system needs to be compressed first, and to ensure a successful compression, completeness of a file system of the operating system to be compressed needs to be determined first.

Specifically, a disk check tool, for example, an e2fsck program, may be used to check completeness of an ext4 file system, and when damage to the file system is detected, the file system is repaired, and therefore, the completeness of the file system of the installed operating system can be determined.

Step 205. Compress system space of the installed operating system, and allocate system space to the operating system to be installed.

After the completeness of the file system of the installed operating system is determined, the installed operating system may be compressed. Subsequently, system space is flexibly allocated, according to capacity of the EMMC or a size of the operating system to be installed, to the operating system to be installed.

Specifically, a file system size adjustment tool, for example, a resize2fs program, may be used to perform file compression on an ext4 system.

Step 206. Update a system partition table, and add a new partition.

After the compression succeeds, the system partition table may be adjusted, that is, a partition is added for the new operating system to be installed.

Step 207. Erase content of the new partition.

To ensure that the new operating system can be successfully installed, content in system space corresponding to the new partition may be erased first.

Step 208. Install the operating system in system space corresponding to the new partition.

The image file of the new operating system is acquired from a specified directory, in which the image file of the new operating system is stored, of the EMMC, and then the new operating system can be installed in the system space corresponding to the system partition.

Step 209. Expand capacity of user space of a new operating system.

Preferably, if a size of a file system of the installed new operating system is less than remaining system space that is obtained after the installed operating system on the smart device is compressed previously, capacity of the user space of the new operating system may be expanded, so as to ensure that a user can use all space of the EMMC of the smart device.

Therefore, in this embodiment of the present invention, automatic installation of multiple operating systems is implemented, and a user does not need to predefine a partition, so that a workload is reduced, and it can be further ensured that the user can completely use all space of a smart device.

Technical solutions for implementing multiple operating systems on a smart device are described in the foregoing two embodiments, and a solution for deleting an operating system on a smart device is described below by using an embodiment.

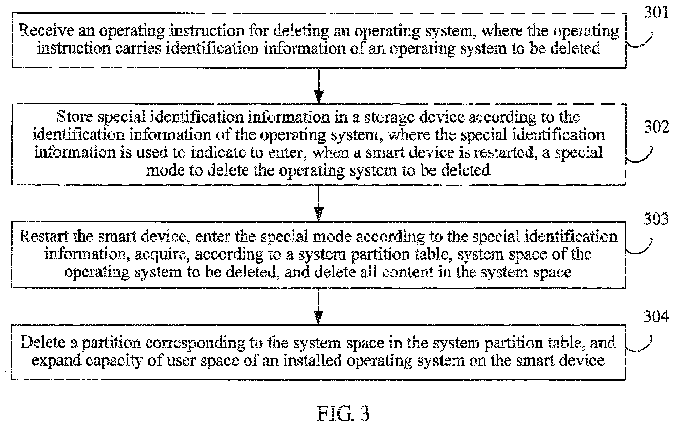

FIG. 3 is a flowchart of a deletion method for multiple operating systems on a smart device according to an example that is not part of the invention. This example is performed by a smart device. As shown in the figure, this embodiment includes the following execution steps:
Step 301. Receive an operating instruction for deleting an operating system, where the operating instruction carries identification information of an operating system to be deleted.

Generally, one operating system is installed on a smart device by default at delivery, where the operating system may provide a human-computer interaction interface, and a user may send an operating instruction to the smart device by using the human-computer interaction interface, so that the smart device performs a corresponding operation according to the received operating instruction.

Preferably, when a factory operating system runs on the smart device, the user may send an instruction for deleting an operating system to the smart device, and when receiving the instruction for deleting an operating system, the smart device may automatically selects an operating system to be deleted.

Step 302. Store special identification information in a storage device according to the identification information of the operating system, where the special identification information is used to instruct to enter, when a smart device is restarted, a special mode to delete the operating system to be deleted.

After receiving the operating instruction for deleting an operating system, the smart device may first save the special identification information at a special location of an EMMC or in a RAM, where the special identification information is used to instruct to delete, after the smart device is restarted, the operating system to be deleted, and therefore, the special mode needs to be entered.

According to the invention, the special mode refers to a system running on a smart device when an operating system is being installed or deleted, for example, a recovery mode of an Android system.

Step 303. Restart the smart device, enter the special mode according to the special identification information, acquire, according to a system partition table, system space of the operating system to be deleted, and delete all content in the system space.

After storing the special identification information, the smart device executes a restart process, and in a BOOT phase of the restart, if detecting the special identification information, the smart device enters a system in the special mode.

The system partition table is searched, a location of the system space of the operating system to be deleted is acquired, and all content at the location is deleted.

Step 304. Delete a partition corresponding to the system space in the system partition table, and expand capacity of user space of an installed operating system on the smart device.

The partition to be deleted is selected in the system partition table, and in order not to waste storage space of the EMMC, the smart device may expand capacity of the installed operating system on the smart device according to capacity of the EMMC or a size of the deleted system space.

In this example, when receiving an operating instruction for deleting an operating system, a smart device may also delete all content of the operating system, and automatically expand capacity of user space of an existing operating system on the smart device according to capacity of an EMMC device or a size of system space released by the operating system to be deleted, so that deletion of an operating system is implemented, and system space released by a deleted operating system can be automatically added for capacity expansion of an existing operating system, so that it is ensured that a user can completely use all space of the smart device.

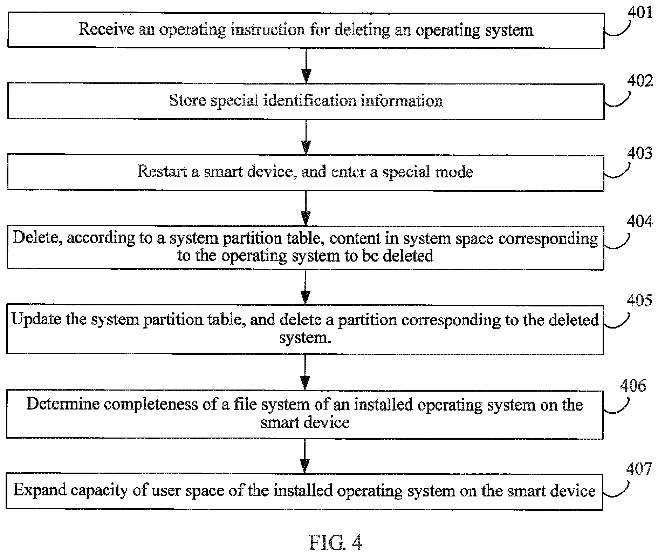

FIG. 4 is a flowchart of another deletion method for multiple operating systems on a smart device according to an example that is not part of the invention. This embodiment is performed by a smart device. As shown in the figure, this embodiment includes the following execution steps:
Step 401. Receive an operating instruction for deleting an operating system.

When an operating system installed by default at delivery runs on a smart device, the smart device may receive an operating instruction for deleting an operating system that is sent by a user, where the operating instruction carries identification information of an operating system to be deleted.

Step 402. Store special identification information.

After receiving the operating instruction for deleting an operating system, the smart device may first save the special identification information at a special location of an EMMC or in a RAM, where the special identification information is used to instruct to delete, after the smart device is restarted, the operating system to be deleted, and therefore, the special mode needs to be entered.

Step 403. Restart a smart device, and enter a special mode.

After storing the special identification information, the smart device executes a restart process, and in a BOOT phase of the restart, if detecting the special identification information, the smart device enters a system in the special mode.

Step 404. Delete, according to a system partition table, content in system space corresponding to the operating system to be deleted.

The system partition table is searched, a location of the system space of the operating system to be deleted is acquired, and all content at the location is deleted.

Step 405. Update the system partition table, and delete a partition corresponding to the deleted system.

After an operating system is deleted, a partition corresponding to the system in the system partition table also needs to be deleted, so as to add space of the partition for capacity expansion of an installed operating system on the smart device, and therefore, a user can use all space of the smart device, and storage space of the EMMC is not wasted.

Step 406. Determine completeness of a file system of an installed operating system on the smart device.

To expand capacity of user space of the installed operating system, completeness of the system needs to be checked first, to prevent capacity expansion from failing. Specifically, a disk check tool, for example, an e2fsck program, may be used to check completeness of an ext4 file system, and when damage to the file system is detected, the file system is repaired, and therefore, the completeness of the file system of the installed operating system can be determined.

Step 407. Expand capacity of user space of the installed operating system on the smart device.

Specifically, capacity of user space of an operating system whose capacity needs to be expanded may be automatically expanded according to capacity of the EMMC or a size of space of the deleted system. For a Linux system, a file system size adjustment tool, for example, a resize2fs program, may be used to expand capacity of an ext4 system.

Therefore, in this example, deletion of an operating system is implemented, and space released by a deleted operating system can be automatically added for capacity expansion of an existing operating system, so that it is ensured that a user can completely use all space of a smart device.

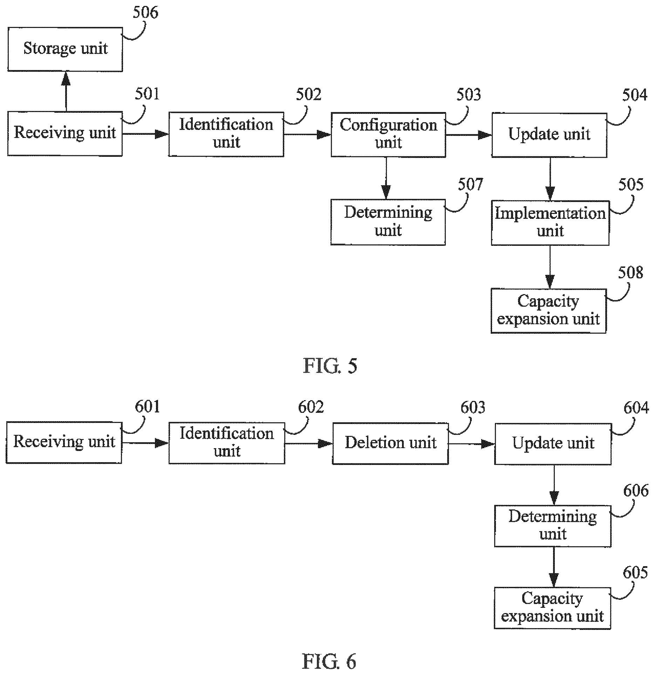

Correspondingly, an embodiment of the present invention further provides an implementation apparatus for multiple operating systems on a smart device. FIG. 5 is a schematic diagram of an implementation apparatus for multiple operating systems on a smart device according to an embodiment of the present invention. As shown in the figure, this embodiment includes the following functional units: a receiving unit 501, an identification unit 502, a configuration unit 503, an update unit 504, and an implementation unit 505.

A receiving unit 501 is configured to receive an operating instruction for installing a new operating system, where the operating instruction carries identification information of a new operating system to be installed.

An identification unit 502 is configured to store special identification information in a storage device according to the identification information of the new operating system acquired by the receiving unit, where the special identification information is used to instruct to enter, when a smart device is restarted, a special mode to install the new operating system.

After the receiving unit 501 receives the operating instruction for installing a new operating system, the identification unit 502 may first save special identification information at a special location of an EMMC or in a RAM, where the special identification information is used to instruct to install, after a smart device is restarted, the new operating system, and therefore, the special mode needs to be entered.

According to the invention, the special mode refers to a system running on a smart device when an operating system is being installed or deleted, for example, a recovery mode of an Android system.

A configuration unit 503 is configured to restart the smart device, enter the special mode according to the special identification information acquired from the identification unit, and allocate, according to capacity of the storage device, system space to the new operating system to be installed.

The configuration unit 503 is specifically configured to: determine a size of system space to be allocated to the new operating system; and compress system space of the installed operating system according to the size of system space, to obtain remaining system space after the compression.

A size of system space is automatically allocated, according to capacity of the EMMC, to the new operating system to be installed, where the system space allocated to the new operating system is obtained by compressing space of the installed operating system on the smart device.

An update unit 504 is configured to update a system partition table according to the system space allocated by the configuration unit.

After system space is allocated to the new system, the system partition table of the smart device needs to be updated according to the allocated system space, and a partition is added, for the new operating system, to the system partition table.

An implementation unit 505 is configured to install the new operating system in the allocated system space according to the system partition table updated by the update unit.

The implementation unit 505 is specifically configured to: acquire, from the system partition table, the system space allocated to the new operating system to be installed; and install an image file of the new operating system in the system space allocated to the new operating system to be installed.

Optionally, to ensure that the new operating system can be successfully installed, content in system space corresponding to the new partition may be erased first before the operating system is installed.

Preferably, the apparatus provided in this embodiment of the present invention further includes: a storage unit 506, configured to store the image file of the new operating system at a preset location in the storage device.

Preferably, to implement installation of a new operating system, an image file of the new operating system to be installed needs to be stored at a preset location, for example, in a specified directory of an EMMC of the smart device. For example, the image file of the new operating system may be stored in a root directory of the EMMC.

Preferably, the apparatus provided in this embodiment of the present invention further includes: a determining unit 507, configured to determine that a file system of the installed operating system on the smart device is complete.

The determining unit 507 is specifically configured to: check completeness of an ext4 file system of the installed operating system by using a disk check tool, and if a bad sector is detected, repair the bad sector.

Optionally, before system space of the installed operating system is compressed, to ensure successful compression, completeness of a file system of the installed operating system needs to be determined.

Preferably, the apparatus provided in this embodiment of the present invention further includes: a capacity expansion unit 508, configured to: if a size of a file system of the installed new operating system is less than the remaining system space after the compression, expand capacity of user space of the new operating system.

If a size of the file system of the installed new operating system is less than the remaining system space that is obtained after the installed operating system on the smart device is compressed previously, the capacity of the user space of the new operating system may be expanded, so as to ensure that a user can use all space of the EMMC of the smart device.

When receiving an operating instruction for installing a new operating system, the apparatus provided in this embodiment of the present invention automatically adjusts, according to capacity of an EMMC storage device, a partition of an installed operating system and a partition of a new operating system to be installed, and installs, in the partition of the new operating system, an image file, stored in the storage device, of the new operating system. Therefore, automatic installation of multiple operating systems is implemented, and a user does not need to predefine a partition, so that a workload is reduced, and it can be further ensured that the user can completely use all space of a smart device.

Correspondingly, an example further provides a deletion apparatus for multiple operating systems on a smart device. FIG. 6 is a schematic diagram of a deletion apparatus for multiple operating systems on a smart device according to an example that is not part of the invention. As shown in the figure, this embodiment includes the following functional units: a receiving unit 601, an identification unit 602, a deletion unit 603, an update unit 604, and a capacity expansion unit 605.

A receiving unit 601 is configured to receive an operating instruction for deleting an operating system, where the operating instruction carries identification information of an operating system to be deleted.

An identification unit 602 is configured to store special identification information in a storage device according to the identification information of the operating system acquired by the receiving unit, where the special identification information is used to instruct to enter, when a smart device is restarted, a special mode to delete the operating system to be deleted.

After the receiving unit 601 receives the operating instruction for deleting an operating system, the identification unit 602 may first save special identification information at a special location of an EMMC or in a RAM, where the special identification information is used to instruct to delete, after a smart device is restarted, the operating system to be deleted, and therefore, the special mode needs to be entered.

According to the invention, the special mode refers to a system running on a smart device when an operating system is being installed or deleted, for example, a recovery mode of an Android system.

A deletion unit 603 is configured to restart the smart device, enter the special mode according to the special identification information acquired from the identification unit, acquire, according to a system partition table, system space of the operating system to be deleted, and delete all content in the system space.

After storing the special identification information, the apparatus executes a process of restarting the smart device, and in a BOOT phase of the restart, if detecting the special identification information, the apparatus enters a system in the special mode.

The system partition table is searched, a location of the system space of the operating system to be deleted is acquired, and all content at the location is deleted.

An update unit 604 is configured to delete, after the deletion unit deletes all the content in the system space, a partition corresponding to the system space in the system partition table.

A capacity expansion unit 605 is configured to expand capacity of user space of an installed operating system on the smart device according to the system partition table updated by the update unit.

The capacity expansion unit 605 is specifically configured to: expand the capacity of the user space of the installed operating system on the smart device according to a size of system space of the deleted operating system; or expand the capacity of the user space of the installed operating system on the smart device according to capacity of the storage device of the smart device.

In order not to waste storage space of the EMMC, the capacity expansion unit 605 may expand capacity of the installed operating system on the smart device according to capacity of the EMMC or a size of deleted system space.

Preferably, the apparatus provided in this example further includes: a determining unit 606, configured to determine that a file system of the installed operating system on the smart device is complete.

The determining unit 606 is specifically configured to: check completeness of an ext4 file system of the installed operating system by using a disk check tool, and if a bad sector is detected, repair the bad sector.

When receiving an operating instruction for deleting an operating system, the apparatus provided in this example can also delete all content of the operating system, and automatically expand capacity of user space of an existing operating system on a smart device according to capacity of an EMMC device or a size of system space released by the operating system to be deleted, so that deletion of an operating system is implemented. In addition, the apparatus can automatically add user space released by a deleted operating system for capacity expansion of an existing operating system, thereby ensuring that a user can completely use all space of the smart device.

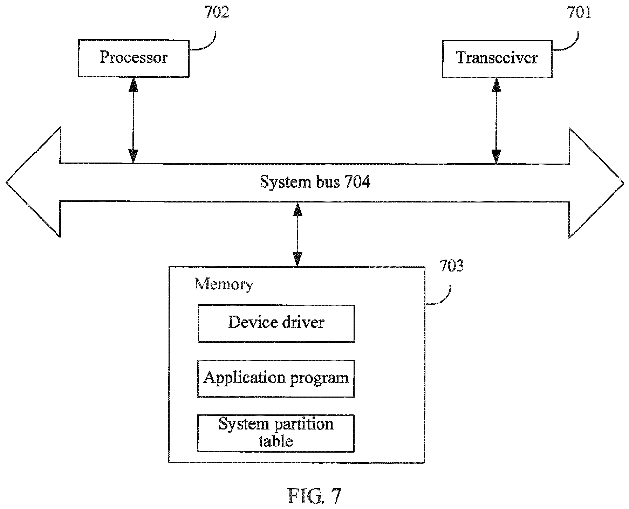

An embodiment of the present invention further provides a smart device. FIG. 7 is a schematic diagram of a smart device according to an embodiment of the present invention. As shown in the figure, the smart device includes a transceiver 701, a memory 702, a processor 703, and a system bus 704, where the system bus 704 is configured to connect the transceiver 701, the processor 702, and the memory 703.

The memory 703 may be an EMMC device, a RAM, or the like, of the smart device, and the memory 703 has a system partition table, an application program, and a device driver. The application program can execute the foregoing method of the present invention; and the device driver may include a network driver and an interface driver.

When the smart device is started, these application programs are loaded into the memory 703 and then accessed by the processor 702, and execute the following instructions:
receiving an operating instruction for installing a new operating system, where the operating instruction carries identification information of a new operating system to be installed;
storing special identification information in a storage device according to the identification information of the new operating system, where the special identification information is used to instruct to enter, when a smart device is restarted, a special mode to install the new operating system;
restarting the smart device, entering the special mode according to the special identification information, and allocating, according to capacity of the storage device, system space to the new operating system to be installed;
updating the system partition table according to the allocated system space; and
installing the new operating system in the allocated system space according to the updated system partition table.

Further, before executing the instruction of receiving an operating instruction for installing a new operating system, the processor 702 further executes an instruction: storing an image file of the new operating system at a preset location in the storage device.

Further, before executing the instruction of allocating, according to capacity of the storage device, system space to the new operating system to be installed, the processor 702 further executes an instruction: determining that a file system of an installed operating system on the smart device is complete.

Specifically, that the processor 702 executes an instruction of determining that a file system of an installed original operating system on the smart device is complete is specifically: checking completeness of an ext4 file system of the installed operating system by using a disk check tool, and if a bad sector is detected, repairing the bad sector.

Further, that the processor 702 executes an instruction of allocating, according to capacity of the storage device, system space to the new operating system to be installed is specifically: determining a size of system space to be allocated to the new operating system; and compressing system space of the installed operating system according to the size of system space, to obtain remaining system space after the compression.

Further, that the processor 702 executes an instruction of installing the new operating system in the allocated system space according to the updated system partition table is specifically: acquiring, from the system partition table, the system space allocated to the new operating system to be installed; and installing the image file of the new operating system in the system space allocated to the new operating system to be installed.

Further, after executing the instruction of installing the new operating system in the allocated system space, the processor 702 further executes an instruction: if a size of a file system of the installed new operating system is less than the remaining system space after the compression, expanding capacity of user space of the new operating system.

Therefore, the smart device provided in this embodiment of the present invention can add a partition according to capacity of an EMMC, and further implement installation of multiple operating systems, so that participation of a user is not required, thereby reducing a workload.

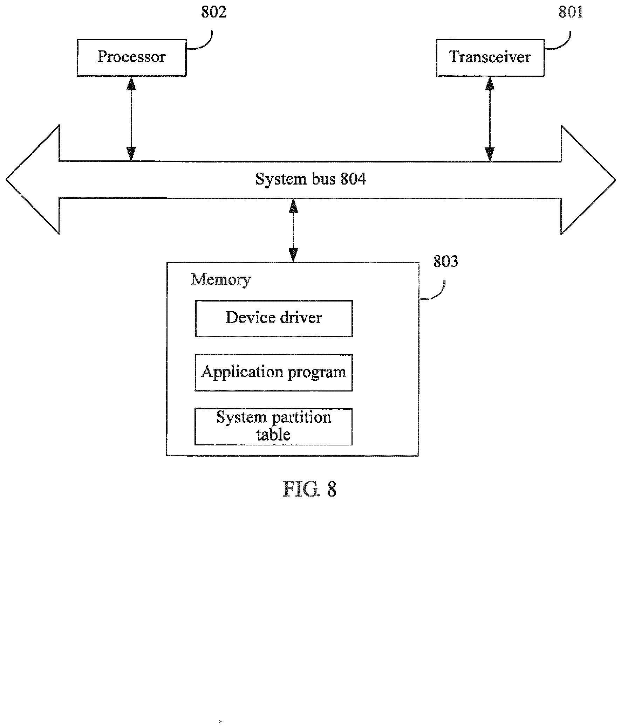

Correspondingly, an embodiment of the present invention further provides a smart device. FIG. 8 is a schematic diagram of a smart device according to an embodiment of the present invention. As shown in the figure, the smart device includes a transceiver 801, a memory 802, a processor 803, and a system bus 804, where the system bus 804 is configured to connect the transceiver 801, the processor 802, and the memory 803.

The memory 803 may be an EMMC device, a RAM, or the like, of the smart device, and the memory 803 has a system partition table, an application program, and a device driver. The application program can execute the foregoing method of the present invention; and the device driver may include a network driver and an interface driver.

When the smart device is started, these application programs are loaded into the memory 803 and then accessed by the processor 802, and execute the following instructions:
receiving an operating instruction for deleting an operating system, where the operating instruction carries identification information of an operating system to be deleted;
storing special identification information in a storage device according to the identification information of the operating system, where the special identification information is used to instruct to enter, when a smart device is restarted, a special mode to delete the operating system to be deleted;
restarting the smart device, entering the special mode according to the special identification information, acquiring, according to the system partition table, system space of the operating system to be deleted, and deleting all content in the system space; and
deleting a partition corresponding to the system space in the system partition table, and expanding capacity of user space of an installed operating system on the smart device.

Further, after executing the instruction of deleting a partition corresponding to the system space in the system partition table, and before executing the instruction of expanding capacity of user space of an installed operating system on the smart device, the processor 802 further executes an instruction: determining that a file system of the installed operating system on the smart device is complete.

Specifically, that the processor 802 executes an instruction of determining that a file system of the installed operating system on the smart device is complete is specifically: checking completeness of an ext4 file system of the installed operating system by using a disk check tool, and if a bad sector is detected, repairing the bad sector.

Further, that the processor 802 executes an instruction of expanding capacity of user space of an installed operating system on the smart device is specifically: expanding the capacity of the user space of the installed operating system on the smart device according to a size of system space of the deleted operating system; or expanding the capacity of the user space of the installed operating system on the smart device according to capacity of the storage device of the smart device.

Therefore, the smart device provided in this embodiment of the present invention can automatically implement deletion of an operating system, and can automatically add user space released by a deleted operating system for capacity expansion of an existing operating system, thereby ensuring that a user can completely use all space of the smart device.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

## Claims

1. An implementation method for multiple operating systems on a smart device, wherein the method comprises:
receiving (101) an operating instruction for installing a new operating system, wherein the operating instruction carries identification information of a new operating system to be installed;
storing (102) special identification information in a storage device according to the identification information of the new operating system, wherein the special identification information is used to instruct to enter, when a smart device is restarted, a special mode to install the new operating system, wherein the special mode refers to a system running on a smart device when an operating system is being installed or deleted;
restarting (103) the smart device, entering the special mode according to the special identification information, and allocating (103), according to capacity of the storage device, system space to the new operating system to be installed;
updating (104) a system partition table according to the allocated system space; and
installing (105) the new operating system in the allocated system space according to the updated system partition table.

2. The implementation method for multiple operating systems on a smart device according to claim 1, before the receiving (101) an operating instruction for installing a new operating system, further comprising: storing an image file of the new operating system at a preset location in the storage device.

3. The implementation method for multiple operating systems on a smart device according to claim 1 or 2, before the allocating (103), according to capacity of the storage device, system space to the new operating system to be installed, further comprising:
determining (204) that a file system of an installed operating system on the smart device is complete,
wherein the determining (204) that a file system of an installed original operating system on the smart device is complete specifically comprises: checking completeness of an ext4 file system of the installed operating system by using a disk check tool, and if a bad sector is detected, repairing the bad sector.

4. The implementation method for multiple operating systems on a smart device according to any one of claims 1 to 3, wherein the allocating (103), according to capacity of the storage device, system space to the new operating system to be installed comprises:
determining a size of system space to be allocated to the new operating system; and
compressing system space of the installed operating system according to the size of system space, to obtain remaining system space after the compression.

5. The implementation method for multiple operating systems on a smart device according to claim 2, wherein the installing (105) the new operating system in the allocated system space according to the updated system partition table comprises: acquiring, from the system partition table, the system space allocated to the new operating system to be installed; and installing the image file of the new operating system in the system space allocated to the new operating system to be installed.

6. The implementation method for multiple operating systems on a smart device according to claim 4, after the installing (105) the new operating system in the allocated system space, further comprising: if a size of a file system of the installed new operating system is less than the remaining system space after the compression, expanding (208) capacity of user space of the new operating system.

7. An implementation apparatus for multiple operating systems on a smart device, wherein the apparatus comprises:
a receiving unit (501), configured to receive an operating instruction for installing a new operating system, wherein the operating instruction carries identification information of the new operating system to be installed;
an identification unit (502), configured to store special identification information in a storage device according to the identification information of the new operating system acquired by the receiving unit, wherein the special identification information is used to instruct to enter, when a smart device is restarted, a special mode to install the new operating system, wherein the special mode refers to a system running on a smart device when an operating system is being installed or deleted;
a configuration unit (503), configured to restart the smart device, enter the special mode according to the special identification information acquired from the identification unit (502), and allocate, according to capacity of the storage device, system space to the new operating system to be installed;
an update unit (504), configured to update a system partition table according to the system space allocated by the configuration unit (503); and
an implementation unit (505), configured to install the new operating system in the allocated system space according to the system partition table updated by the update unit (504).

8. The implementation apparatus for multiple operating systems on a smart device according to claim 7, wherein the apparatus further comprises: a storage unit (506), configured to store an image file of the new operating system at a preset location in the storage device.

## Patentansprüche

1. Implementierungsverfahren für mehrere Betriebssysteme auf einer Smart-Vorrichtung, wobei das Verfahren Folgendes umfasst:
Empfangen (101) einer Bedienungsanleitung zum Installieren eines neuen Betriebssystems, wobei die Bedienungsanleitung Identifikationsinformationen eines zu installierenden neuen Betriebssystems enthält;
Speichern (102) spezieller Identifikationsinformationen in einer Speichervorrichtung gemäß den Identifikationsinformationen des neuen Betriebssystems, wobei die speziellen Identifikationsinformationen verwendet werden, um anzuweisen, beim Neustart einer Smart-Vorrichtung in einen speziellen Modus zum Installieren des neuen Betriebssystems zu wechseln, wobei sich der Spezialmodus auf ein System bezieht, das auf einer Smart-Vorrichtung ausgeführt wird, wenn ein Betriebssystem installiert oder gelöscht wird;
Neustarten (103) der Smart-Vorrichtung, Aufrufen des Spezialmodus gemäß den speziellen Identifikationsinformationen und Zuweisen (103) von Systemspeicherplatz entsprechend der Kapazität der Speichervorrichtung für das neu zu installierende Betriebssystem;
Aktualisieren (104) einer Systempartitionstabelle entsprechend dem zugewiesenen Systemspeicherplatz; und
Installieren (105) des neuen Betriebssystems im zugewiesenen Systemspeicherplatz gemäß der aktualisierten Systempartitionstabelle.

2. Implementierungsverfahren für mehrere Betriebssysteme auf einer Smart-Vorrichtung nach Anspruch 1, vor dem Empfangen (101) einer Bedienanweisung zur Installation eines neuen Betriebssystems, weiterhin umfassend: Speichern einer Image-Datei des neuen Betriebssystems an einem voreingestellten Ort in der Speichervorrichtung.

3. Implementierungsverfahren für mehrere Betriebssysteme auf einer Smart-Vorrichtung nach Anspruch 1 oder 2, vor dem Zuweisen (103), gemäß der Kapazität der Speichervorrichtung, von Systemspeicherplatz für das neu zu installierende Betriebssystem, ferner umfassend:
Bestimmen (204), dass ein Dateisystem eines auf der Smart-Vorrichtung installierten Betriebssystems vollständig ist,
wobei das Bestimmen (204), dass ein Dateisystem eines installierten ursprünglichen Betriebssystems auf der Smart-Vorrichtung vollständig ist, insbesondere Folgendes umfasst: Überprüfen der Vollständigkeit eines ext4-Dateisystems des installierten Betriebssystems mithilfe eines Festplattenprüftools und Reparieren des fehlerhaften Sektors, wenn ein fehlerhafter Sektor erkannt wird.

4. Implementierungsverfahren für mehrere Betriebssysteme auf einer Smart-Vorrichtung nach Anspruch 1 oder 3, wobei das Zuweisen (103) von Systemspeicherplatz für das neu zu installierende Betriebssystem entsprechend der Kapazität der Speichervorrichtung Folgendes umfasst:
Bestimmen einer Größe des Systemspeicherplatzes, der dem neuen Betriebssystem zugewiesen werden soll; und
Komprimieren des Systemspeicherplatzes des installierten Betriebssystems entsprechend der Größe des Systemspeicherplatzes, um nach der Komprimierung verbleibenden Systemspeicherplatz zu erhalten.

5. Implementierungsverfahren für mehrere Betriebssysteme auf einer Smart-Vorrichtung nach Anspruch 2, wobei das Installieren (105) des neuen Betriebssystems im zugewiesenen Systemspeicherplatz gemäß der aktualisierten Systempartitionstabelle Folgendes umfasst: Erfassen des Systemspeicherplatzes, der dem neu zu installierenden Betriebssystem zugewiesen ist, aus der Systempartitionstabelle; und Installieren der Image-Datei des neuen Betriebssystems in dem Systemspeicherplatz, der dem zu installierenden neuen Betriebssystem zugewiesen ist.

6. Implementierungsverfahren für mehrere Betriebssysteme auf einer Smart-Vorrichtung nach Anspruch 4, nach der Installation (105) des neuen Betriebssystems im zugewiesenen Systemspeicherplatz, weiterhin umfassend: wenn die Größe eines Dateisystems des installierten neuen Betriebssystems kleiner ist als der verbleibende Systemspeicherplatz nach der Komprimierung, Erweitern (208) der Kapazität des Benutzerspeicherplatzes des neuen Betriebssystems.

7. Implementierungsvorrichtung für mehrere Betriebssysteme auf einer Smart-Vorrichtung wobei die Vorrichtung Folgendes umfasst:
eine Empfangseinheit (501), die konfiguriert ist, um eine Bedienungsanleitung zum Installieren eines neuen Betriebssystems zu empfangen, wobei die Bedienungsanleitung Identifikationsinformationen des zu installierenden neuen Betriebssystems enthält;
eine Identifikationseinheit (502), die konfiguriert ist, um gemäß den von der Empfangseinheit erfassten Identifikationsinformationen des neuen Betriebssystems spezielle Identifikationsinformationen in einer Speichervorrichtung zu speichern, wobei die speziellen Identifikationsinformationen verwendet werden, um anzuweisen, beim Neustart einer Smart-Vorrichtung in einen speziellen Modus einzutreten, um das neue Betriebssystem zu installieren, wobei sich der spezielle Modus auf ein System bezieht, das auf einer Smart-Vorrichtung ausgeführt wird, wenn ein Betriebssystem installiert oder gelöscht wird;
eine Konfigurationseinheit (503), die konfiguriert ist, um die Smart-Vorrichtung neu zu starten, in den Spezialmodus gemäß den von der Identifikationseinheit (502) erfassten speziellen Identifikationsinformationen einzutreten und entsprechend der Kapazität der Speichervorrichtung Systemspeicherplatz für das neu zu installierende Betriebssystem zuweisen;
eine Aktualisierungseinheit (504), die konfiguriert ist, um eine Systempartitionstabelle entsprechend dem von der Konfigurationseinheit (503) zugewiesenen Systemspeicherplatz zu aktualisiert; und
eine Implementierungseinheit (505), die konfiguriert ist, um das neue Betriebssystem im zugewiesenen Systemspeicherplatz gemäß der von der Aktualisierungseinheit (504) aktualisierten Systempartitionstabelle zu installieren.

8. Implementierungsvorrichtung für mehrere Betriebssysteme auf einer Smart-Vorrichtung nach Anspruch 7, wobei die Vorrichtung weiterhin Folgendes umfasst: eine Speichereinheit (506), die konfiguriert ist, um eine Image-Datei des neuen Betriebssystems an einem voreingestellten Ort in der Speichervorrichtung zu speichern.

## Revendications

1. Procédé de mise en place pour systèmes d'exploitation multiples sur un dispositif intelligent, le procédé comprenant :
la réception (101) d'une instruction d'exploitation pour installer un nouveau système d'exploitation, dans lequel l'instruction d'exploitation transporte des informations d'identification d'un nouveau système d'exploitation à installer ;
le stockage (102) d'informations d'identification spéciales dans un dispositif de stockage en fonction des informations d'identification du nouveau système d'exploitation, dans lequel les informations d'identification spéciales sont utilisées pour demander d'entrer, lorsqu'un dispositif intelligent est redémarré, dans un mode spécial pour installer le nouveau système d'exploitation, dans lequel le mode spécial fait référence à un système s'exécutant sur un dispositif intelligent lorsqu'un système d'exploitation est en cours d'installation ou de suppression ;
le redémarrage (103) du dispositif intelligent, l'entrée dans le mode spécial en fonction des informations d'identification spéciales et l'attribution (103), en fonction de la capacité du dispositif de stockage, d'un espace système au nouveau système d'exploitation à installer ;
la mise à jour (104) d'une table de partition système en fonction de l'espace système attribué ; et
l'installation (105) du nouveau système d'exploitation dans l'espace système attribué en fonction de la table de partition système mise à jour.

2. Procédé de mise en place pour systèmes d'exploitation multiples sur un dispositif intelligent selon la revendication 1, avant la réception (101) d'une instruction d'exploitation pour installer un nouveau système d'exploitation, comprenant en outre : le stockage d'un fichier image du nouveau système d'exploitation au niveau d'un emplacement prédéfini dans le dispositif de stockage.

3. Procédé de mise en place pour systèmes d'exploitation multiples sur un dispositif intelligent selon la revendication 1 ou 2, avant l'attribution (103), en fonction de la capacité du dispositif de stockage, de l'espace système au nouveau système d'exploitation à installer, comprenant en outre :
la détermination (204) qu'un système de fichiers d'un système d'exploitation installé sur le dispositif intelligent est complet,
dans lequel la détermination (204) qu'un système de fichiers d'un système d'exploitation d'origine installé sur le dispositif intelligent est complet comprend spécifiquement : la vérification de l'exhaustivité d'un système de fichiers ext4 du système d'exploitation installé à l'aide d'un outil de vérification de disque, et si un secteur défectueux est détecté, la réparation du secteur défectueux.

4. Procédé de mise en place pour systèmes d'exploitation multiples sur un dispositif intelligent selon l'une quelconque des revendications 1 à 3, dans lequel l'attribution (103), en fonction de la capacité du dispositif de stockage, d'un espace système au nouveau système d'exploitation à installer, comprend :
la détermination d'une taille d'espace système à attribuer au nouveau système d'exploitation ; et
la compression d'un espace système du système d'exploitation installé en fonction de la taille de l'espace système, pour obtenir l'espace système restant après la compression.

5. Procédé de mise en place pour systèmes d'exploitation multiples sur un dispositif intelligent selon la revendication 2, dans lequel l'installation (105) du nouveau système d'exploitation dans l'espace système attribué en fonction de la table de partition système mise à jour comprend : l'acquisition, à partir de la table de partition système, de l'espace système attribué au nouveau système d'exploitation à installer ; et l'installation du fichier image du nouveau système d'exploitation dans l'espace attribué au nouveau système d'exploitation à installer.

6. Procédé de mise en place pour systèmes d'exploitation multiples sur un dispositif intelligent selon la revendication 4, après l'installation (105) du nouveau système d'exploitation dans l'espace système attribué, comprenant en outre : si une taille d'un système de fichiers du nouveau système d'exploitation installé est inférieur à l'espace système restant après la compression, l'expansion (208) de la capacité de l'espace utilisateur du nouveau système d'exploitation.

7. Appareil de mise en place pour systèmes d'exploitation multiples sur un dispositif intelligent, dans lequel l'appareil comprend :
une unité de réception (501), configurée pour recevoir une instruction d'exploitation pour installer un nouveau système d'exploitation, dans lequel l'instruction d'exploitation transporte des informations d'identification du nouveau système d'exploitation à installer ;
une unité d'identification (502), configurée pour stocker des informations d'identification spéciales dans un dispositif de stockage en fonction des informations d'identification du nouveau système d'exploitation acquises par l'unité de réception, dans lequel les informations d'identification spéciales sont utilisées pour demander d'entrer, lorsqu'un dispositif intelligent est redémarré, dans un mode spécial pour installer le nouveau système d'exploitation, dans lequel le mode spécial fait référence à un système s'exécutant sur un dispositif intelligent lorsqu'un système d'exploitation est en cours d'installation ou de suppression ;
une unité de configuration (503), configurée pour redémarrer le dispositif intelligent, entrer dans le mode spécial en fonction des informations d'identification spéciales acquises à partir de l'unité d'identification (502), et attribuer, en fonction de la capacité du dispositif de stockage, un espace système au nouveau système d'exploitation à installer ;
une unité de mise à jour (504), configurée pour mettre à jour une table de partition système en fonction de l'espace système attribué par l'unité de configuration (503) ; et
une unité de mise en place (505), configurée pour installer le nouveau système d'exploitation dans l'espace système attribué en fonction de la table de partition système mise à jour par l'unité de mise à jour (504).

8. Appareil de mise en place pour systèmes d'exploitation multiples sur un dispositif intelligent selon la revendication 7, dans lequel l'appareil comprend en outre : une unité de stockage (506), configurée pour stocker un fichier image du nouveau système d'exploitation au niveau d'un emplacement prédéfini dans le dispositif de stockage.
